Europäisches Patentamt

European Patent Office

Office européen des brevets

(19)

(11) Numéro de publication : **0 082 038**
**B1**

(12) # FASCICULE DE BREVET EUROPÉEN

(45) Date de publication du fascicule du brevet :
07.08.85

(51) Int. Cl.⁴ : **F 16 K 17/10, G 21 D 3/04**

(21) Numéro de dépôt : **82402157.0**

(22) Date de dépôt : **26.11.82**

(54) **Dispositif de protection d'une capacité telle qu'un circuit ou un récipient contenant un fluide sous pression.**

(30) Priorité : **03.12.81 FR 8122662**

(43) Date de publication de la demande :
**22.06.83 Bulletin 83/25**

(45) Mention de la délivrance du brevet :
**07.08.85 Bulletin 85/32**

(84) Etats contractants désignés :
**BE CH DE GB IT LI SE**

(56) Documents cités :
**FR-A- 2 276 665**
**FR-A- 2 420 701**
**GB-A- 2 060 982**
**US-A- 3 330 298**

(73) Titulaire : **ELECTRICITE DE FRANCE Service National
2, rue Louis Murat
F-75008 Paris (FR)**

**SOCIETE D'EXPLOITATION DE BREVETS POUR
L'INDUSTRIE ET LA MARINE (SEBIM)
Z.I. La Palunette
F-13220 Chateauneuf les Martigues (FR)**

(72) Inventeur : **Gery, Alain
20, rue de Beaugaillard
F-37170 Saint Avertin (FR)**
Inventeur : **Chantot, Hubert
10-12, rue de Reims
F-75013 Paris (FR)**
Inventeur : **Gemignani, François
14, Lotissement du Pati
F-13500 Martigues (FR)**

(74) Mandataire : **Mongrédien, André et al
c/o BREVATOME 25, rue de Ponthieu
F-75008 Paris (FR)**

EP 0 082 038 B1

## Description

La présente invention se rapporte à un dispositif de protection d'une capacité contenant un fluide sous pression.

Un tel dispositif peut notamment être utilisé pour protéger contre les surpressions un circuit ou un récipient fonctionnant en eau ou en vapeur sous pression.

L'invention s'applique avantageusement à la protection des circuits primaires principaux des réacteurs nucléaires à eau sous pression, le dispositif selon l'invention pouvant notamment être relié au dôme supérieur du pressuriseur associé au circuit primaire d'un tel réacteur. On notera toutefois dès à prsent que le dispositif selon l'invention peut être appliqué à la protection d'autres types de capacité (voir p. ex. FR-A-2 420 701).

Dans l'état actuel de la technique, la protection du circuit primaire principal d'un réacteur nucléaire à eau pressurisée contre les surpressions fait intervenir un certain nombre d'éléments parmi lesquels se trouvent notamment des vannes de décharge et des soupapes de sûreté du pressuriseur, qui jouent un rôle essentiel. De façon plus précise, on utilise actuellement trois soupapes de sûreté à ressort, chacune de ces soupapes étant reliée au dôme supérieur du pressuriseur par une tuyauterie en forme de col de cygne, non calorifugée, ce qui permet la formation par condensation d'un bouchon d'eau en amont des soupapes. En pratique, ces soupapes de sûreté sont tarées à 172 bars. Parallèlement, trois vannes de décharge à ouverture tout ou rien et à motorisation de type pneumatique assisté à fermeture sur manque d'air sont reliées au dôme supérieur du pressuriseur par des tuyauteries dont la disposition permet également la formation par condensation d'un bouchon d'eau. En pratique, deux de ces vannes sont tarées à 162 bars, la troisième étant commandée par un P.I.D. (Système de contrôle commande Proportionnelle Intégrale Dérivée). Chaque vanne de décharge est isolable individuellement à l'amont par une vanne motorisée électrique dont le rôle essentiel est de permettre l'isolement d'une vanne de décharge qui perdrait son étanchéité.

Bien que ce dispositif de protection actuel soit globalement satisfaisant, il présente toutefois certains inconvénients liés notamment aux problèmes suivants :
— les soupapes de sûreté utilisées actuellement présentent un fonctionnement instable à certains régimes, un risque de dérive des points de tarage, ainsi qu'un risque de perte d'étanchéité, qui nécessitent d'effectuer des contrôles et un entretien particulièrement lourd et pénalisant ;
— l'existence d'un bouchon d'eau en amont des soupapes introduit des risques de battement lors du passage de ce bouchon d'eau, ce qui peut conduire à une situation de blocage de la soupape en position plus ou moins ouverte ; si cette situation est prise en compte dans les analyses de sûreté, elle peut toutefois conduire à des conséquences très graves en matière d'exploitation et de disponibilité de la tranche ;
— le contrôle-commande des vannes d'isolement et des vannes de décharge est relativement complexe par suite de la nécessité d'assurer la fermeture automatique des vannes d'isolement en-dessous d'un certain seuil dans le but de limiter les conséquences d'une dépressurisation par ouverture intempestive ou non fermeture des vannes de décharge ;
— les vannes d'isolement doivent être expertisées après chaque fonctionnement sous plein débit, ce qui représente une servitude d'exploitation peu satisfaisante ;
— le risque de défaillance à la fermeture des soupapes de sûreté a des conséquences qui peuvent être considérées comme acceptables du point de vue de la sûreté et qui sont suffisamment graves du point de vue exploitation et disponibilité de la tranche pour que la possibilité d'isolement de ces soupapes soit sérieusement examinée.

L'isolement automatique d'une soupape de sûreté par une soupape d'isolement est déjà connu du brevet GB-A-2 060 982.

Compte tenu desdits différents problèmes, on voit qu'il est souhaitable de disposer d'un dispositif nouveau permettant à la fois :
— de remplir les mêmes fonctions que les dispositifs de la technique antérieure ;
— d'isoler de façon automatique et rapide une brèche primaire ayant pour origine une mauvaise refermeture d'une soupape ; et
— de réduire considérablement les contraintes de maintenance des matériels de protection du circuit primaire.

Toutefois, on comprendra que, même si le dispositif de protection selon l'invention est particulièrement adapté à la protection du circuit primaire d'un réacteur à eau pressurisée, il peut très bien être appliqué à la protection de capacités autres que nucléaires, notamment lorsqu'il est souhaitable de réaliser l'isolement automatique d'une soupape, non pas pour des raisons de sûreté, mais pour accroître la disponibilité et réduire la maintenance et l'intervention sur des organes importants.

A cet effet, et conformément à la présente invention, il est proposé un dispositif de protection d'une capacité contenant un fluide sous pression, ce dispositif comprenant une soupape de protection comportant au moins un orifice d'entrée communiquant avec la capacité, au moins un orifice de sortie, un siège de valve placé entre l'orifice d'entrée et l'orifice de sortie et un clapet sensible à une contre pression pour venir normalement en appui étanche sur le siège, le dispositif comprenant de plus des moyens sensibles à la pression régnant dans la capacité pour relâcher ladite contre pression lorsque ladite pression dépasse un premier seuil prédéterminé, caractérisé en ce que l'orifice de sortie de ladite soupape de protection communique avec l'orifice d'entrée d'une soupape d'isolement semblable à la soupape de protection, de deuxièmes moyens sensibles à la pression règnant dans la capacité étant prévus pour relâcher la contre pression appliquée sur le clapet de la soupape d'isolement lorsque ladite pression dépasse un deuxième seuil prédéterminé inférieur au premier.

Dans un mode de réalisation particulièrement avantageux de l'invention, le deuxième seuil est légèrement supérieur à la pression nominale dans ladite capacité et les deuxièmes moyens commandent l'application de ladite contre pression sur le clapet de la soupape d'isolement lorsque la pression dans la capacité descend en dessous d'un seuil de fermeture inférieur à ladite pression nominale.

Conformément à une autre caractéristique de l'invention, les deuxièmes moyens comprennent de préférence des moyens de commande auxiliaires aptes à relâcher la contre pression appliquée sur le clapet de la soupape d'isolement lorsque la pression règnant dans la capacité est inférieure au deuxième seuil.

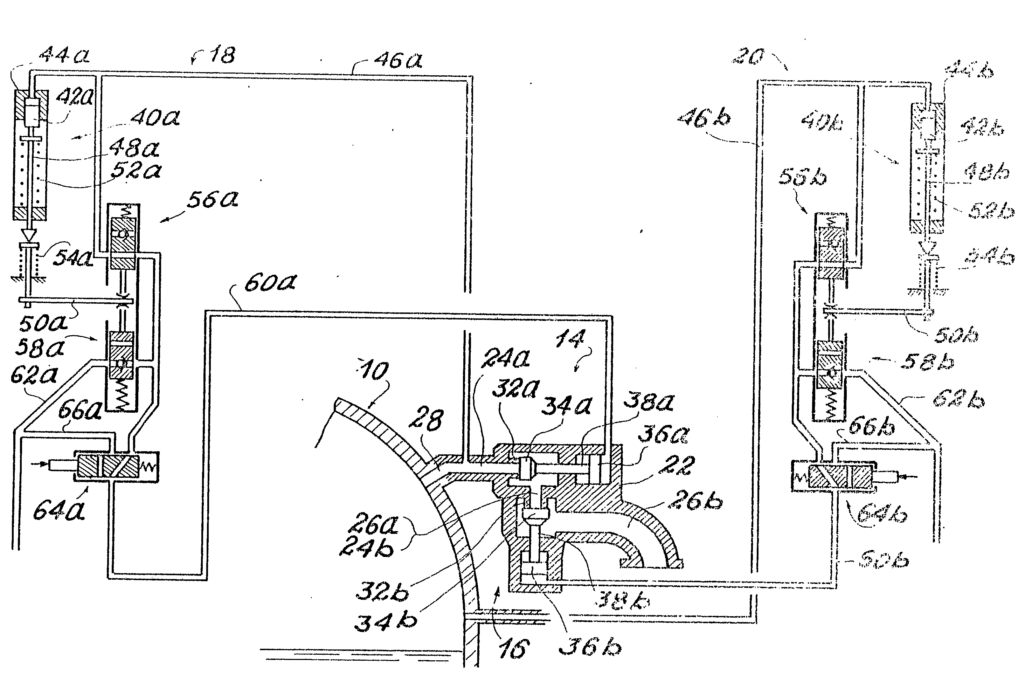

On décrira maintenant, à titre d'exemple non limitatif, un mode de réalisation particulier de l'invention en se référant aux dessins annexés dans lesquels la figure unique représente de façon schématique un dispositif de protection selon l'invention relié au dôme supérieur du pressuriseur des circuits primaires principaux d'un réacteur nucléaire à eau sous pression.

Sur la figure, on a représenté une partie du dôme du pressuriseur 10 des circuits primaires d'un réacteur nucléaire à eau sous pression, ainsi qu'un dispositif de protection de ces circuits réalisé conformément à l'invention. En pratique, trois dispositifs de ce type seront montés en parallèle sur un réacteur de 900 Mw.

Le dispositif de protection comprend une soupape de protection ou de décharge 14, une soupape d'isolement 16, des moyens 18 pour commander la soupape 14 et des moyens 20 pour commander la soupape 16.

Conformément à l'invention, les soupapes 14 et 16 sont montées en série entre le dôme supérieur 10 du pressuriseur et un collecteur du réservoir de décharge de ce dernier (non représenté).

Dans le mode de réalisation représenté, les soupapes 14 et 16 comprennent un corps commun 22. Ces soupapes sont semblables, de telle sorte que les éléments correspondants seront désignés par le même chiffre de référence, affecté de la lettre a ou b selon qu'il s'agit de la soupape 14 ou de la soupape 16. Chaque soupape comprend un orifice d'entrée 24a, 24b et un orifice de sortie 26a, 26b. Toutefois, étant donné que ces orifices sont ménagés dans un corps commun, l'orifice d'entrée 24b de la soupape 16 est confondu avec l'orifice de sortie 26a de la soupape 14. L'orifice d'entrée 24a de la scupape 14 communique avec le dôme supérieur 10 du pressuriseur par une tuyauterie 28. Enfin, l'orifice de sortie 26b de la soupape 16 communique avec le collecteur du réservoir de décharge (non représenté).

Bien entendu, dans une variante de réalisation non représentée, les soupapes 14 et 16 pourraient être réalisées dans deux corps séparés fixés l'un à l'autre par bridage, de telle sorte que l'orifice d'entrée 24b de la soupape 16 communique avec l'orifice de sortie 26a de la soupape 14.

Entre l'orifice d'entrée et l'orifice de sortie de chacune des soupapes 14 et 16, le corps 22 définit un siège de valve 32a, 32b sur lequel vient normalement en appui étanche un clapet 34a, 34b. Chacun des clapets est relié à un piston 36a, 36b par une tige 38a, 38b. Chacun des ensembles constitués par le clapet, la tige et le piston coulisse dans le corps de la soupape correspondante et se trouve soumis aux forces antagonistes résultant de la pression appliquée sur le clapet à partir de l'orifice d'entrée et de la contre pression appliquée en sens opposé sur le piston par les moyens de commande 18 et 20 correspondants.

Comme on va le voir, cette contre pression est la même que la pression appliquée sur le clapet dans le mode de réalisation représenté. En conséquence, afin de maintenir le clapet en appui étanche sur son siège dans les conditions normales de fonctionnement, on donne à la surface des pistons sur laquelle s'applique la contre pression des dimensions plus grandes que la surface des clapets sur laquelle s'applique la pression règnant dans le dôme du pressuriseur. Toutefois, dans une variante de réalisation non représentée, la contre pression pourrait être supérieure à la pression appliquée sur le clapet, de telle sorte que ces deux surfaces pourraient présenter des dimensions identiques.

Comme les soupapes 14 et 16, les moyens 18 et 20 pour commander leur fonctionnement sont semblables et on désignera, pour simplifier, les éléments qui les composent par les mêmes chiffres de référence affectés des indices a et b selon qu'il s'agit des moyens 18 ou des moyens 20.

Chacun des moyens de commande 18 et 20 comprend tout d'abord un détecteur 40a, 40b qui se compose d'un piston 42a, 42b monté de façon étanche dans un cylindre 44a, 44b, de telle sorte que l'une des faces du piston soit sensible à la pression règnant dans la partie supérieure du dôme 10 du pressuriseur, cette pression lui parvenant par une tuyauterie 46a, 46b respectivement. L'autre face du piston est reliée par une tige 48a, 48b à une barre d'actionnement 50a, 50b. Un ressort antagoniste 52a, 52b exerce sur chacune des tiges une force opposée à la force exercée par la pression de fluide sur le piston correspondant, de façon à définir pour chacun des détecteurs 40a, 40b un seuil de pression en dessous duquel aucun mouvement du piston 42a, 42b ne se produit. Un ressort de compression faiblement taré 54a, 54b maintient chacune des barres 50a, 50b en contact avec l'extrémité de la tige 48a, 48b correspondante.

La barre 50a, 50b de chacun des détecteurs commande selon la position occupée par le piston correspondant soit l'ouverture d'un clapet 56a, 56b, soit l'ouverture d'un clapet 58a, 58b. Ces clapets ont été représentés de façon schématique sur la figure sous la forme de tiroirs, mais on comprendra aisément qu'ils peuvent être en réalité constitués par des clapets équipés d'un poussoir sur lequel peut venir prendre appui le levier correspondant afin de soulever en permanence le clapet de son siège.

Le clapet 56a, 56b est monté dans une canalisation 60a, 60b reliant la canalisation 46a, 46b à la chambre de la soupape 14, 16 définie par la face du piston 36a, 36b sur laquelle doit être appliquée la contre pression. Comme l'illustre la figure, la barre 50a, 50b maintient normalement le clapet 56a, 56b en position ouverte lorsque la pression à contrôler est inférieure au seuil prédéterminé au-delà duquel le piston 42a, 42b du détecteur correspondant se déplace à l'encontre de la force exercée par le ressort 52a, 52b. Lorsque ce seuil est dépassé, le clapet 56a, 56b interdit tout écoulement de fluide du pressuriseur vers la chambre de contre pression de la soupape correspondante.

La soupape 58a, 58b est placée sur une canalisation 62a, 62b prise en dérivation sur la canalisation 60a, 60b en aval du clapet 56a, 56b. Cette canalisation 62a, 62b communique à son autre extrémité avec un dispositif de purge (non représenté).

La commande du clapet 58a, 58b par la barre 50a, 50b se fait à l'inverse de celle du clapet 56a, 56b. En d'autres termes, et comme l'illustre la figure, tant que le seuil du détecteur 40a, 40b n'est pas atteint, le levier du détecteur n'agit pas sur le clapet 58a, 58b et ce dernier empêche alors tout écoulement de fluide de la canalisation 60a vers le dispositif de purge. En revanche, lorsque ce seuil est atteint, la barre 50a, 50b maintient en permanence le clapet 58a, 58b en position ouverte.

Enfin, on a représenté sur la figure chacun des moyens de commande 18 et 20 équipé d'un robinet trois voies 64a, 64b permettant de commander à volonté le relâchement de la contre pression appliquée sur la soupape 14, 16 correspondante par mise en communication de la canalisation 60a, 60b avec la canalisation de purge 62a, 62b en aval des clapets 56a, 56b et 58a, 58b, quelle que soit la position occupée par le détecteur 40a, 40b. Lorsqu'ils ne sont pas actionnés, on voit sur la figure que les robinets trois voies 64a, 64b assurent normalement la continuité de la canalisation 60a, 60b en aval du clapet 56a, 56b. En revanche, lorsque ces robinets sont actionnés, ils interrompent cette communication et font communiquer la partie des canalisations 60a, 60b située en aval de ces robinets avec la partie des canalisations 62a, 62b en aval des clapets 58a, 58b, par des canalisations 66a, 66b.

La commande de chacun des robinets trois voies 64a et 64b peut être faite soit à l'aide d'un bouton poussoir comme on l'a représenté sur la figure, soit par une commande électromagnétique, soit par ces deux types de commande. Dans certaines conditions de fonctionnement, il peut être nécessaire de disposer d'une commande manuelle monostable des robinets 64a, 64b. Ce résultat peut être obtenu soit en prévoyant un verrouillage mécanique de ces robinets en position ouverte, soit en équipant les robinets de boutons poussoirs à deux niveaux d'enfoncement autorisant selon le cas un fonctionnement des robinets en monostable ou en bistable.

Lorsque le dispositif qui vient d'être décrit s'applique à la protection des circuits primaires d'un réacteur à eau sous pression de 900 MW, les détecteurs 40a et 40b ne diffèrent que par leur pression de tarage. Ainsi, en régime nominal de fonctionnement, la pression dans les circuits primaires est généralement voisine de 155 bars. Le seuil d'ouverture de la soupape 14 est alors fixé soit à 172 bars lorsque cette soupape équipe une ligne de sûreté, soit à 162 bars lorsque cette soupape équipe la ligne spécialisée pour la décharge. La pression de fermeture de la soupape sera alors selon le cas soit de 169 bars soit de 159 bars.

En ce qui concerne la soupape d'isolement 16, ces pressions d'ouverture et de fermeture sont fixées respectivement à 158 et à 138 bars à l'aide du détecteur 40b.

Lors de la montée en pression dans le circuit primaire du réacteur, les soupapes 14 et 16 sont normalement en position fermée sous l'effet de la contre pression agissant sur les pistons 36a et 36b correspondants, les moyens de commande 18 et 20 occupant alors les positions représentées sur la figure. Par suite de dispositions réglementaires, on prévoit toutefois de commander l'ouverture de la soupape d'isolement 16 jusqu'à ce que la pression de fermeture de celle-ci (138 bars) soit atteinte. A cet effet, on agira alors sur le robinet trois voies 64b pour faire communiquer la chambre de contre pression de la soupape 16 avec la purge. Le seuil d'ouverture automatique de la soupape 16 (158 bars) étant de très peu supérieur à la pression nominale de fonctionnement (155 bars), on provoque volontairement l'ouverture de la soupape d'isolement 16 en élevant momentanément la pression jusqu'à ce niveau afin que la soupape 16 se trouve en position ouverte au cours du fonctionnement normal du réacteur. Si une telle opération n'est pas effectuée volontairement, il est à noter qu'elle sera effectuée automatiquement dès lors que le seuil d'ouverture de la soupape 16 (158 bars) sera dépassé lors d'un transitoire conduisant soit à la décharge sur la ligne spécialisée tarée à 162 bars, soit à la décharge sur les lignes de sûreté tarées à 172 bars, dans le cas d'un défaut sur une de ces lignes.

Lorsque la pression dans le pressuriseur s'élève au-dessus de la pression d'ouverture (162 ou 172 bars) de la soupape 14, celle-ci s'ouvre donc alors que la soupape d'isolement 16 est déjà ouverte. Ainsi, la pression est abaissée instantanément dans le pressuriseur par mise en communication de la partie supérieure de celui-ci avec son réservoir de décharge.

Si, par exemple par suite d'une défaillance de la soupape 14 empêchant sa fermeture, la pression chute exagérément dans le pressuriseur, la soupape d'isolement 16 se ferme automatiquement à 138 bars, et la soupape d'isolement 16 devient alors la soupape de la ligne. Par suite de la plage morte de fonctionnement de 20 bars de la soupape 16, la pression dans le pressuriseur peut remonter jusqu'à 158 bars sans qu'une ouverture de la soupape 16 ne se produise. On permet ainsi à la pression dans le circuit primaire de rejoindre sa valeur nominale de fonctionnement de 155 bars. La réouverture de la soupape 16 intervient alors de l'une des deux manières indiquées précédemment dans la mesure où le défaut sur la première soupape 14 a été éliminé.

Bien entendu, l'invention n'est pas limitée au mode de réalisation qui vient d'être décrit à titre d'exemple mais en couvre toutes les variantes. Ainsi, l'invention peut être appliquée à la protection de tout circuit ou de toute enceinte nécessitant un isolement automatique en dessous d'une certaine pression, que ce soit pour des raisons de sécurité comme on vient de le voir ou pour accroître la disponibilité et réduire la maintenance et l'intervention sur des organes importants.

## Revendications

1. Dispositif de protection d'une capacité (10) contenant un fluide sous pression, ce dispositif comprenant une soupape de protection (14) comportant au moins un orifice d'entrée (24a) communiquant avec la capacité (10), au moins un orifice de sortie (26a), un siège de valve (32a) placé entre l'orifice d'entrée (24a) et l'orifice de sortie (26a) et un clapet (34a) sensible à une contreprssion pour venir normalement en appui étanche sur le siège (32a), le dispositif comprenant de plus des moyens (18) sensibles à la pression règnant dans la capacité pour relâcher ladite contrepression lorsque ladite pression dépasse un premier seuil prédéterminé, caractérisé en ce que l'orifice de sortie (26a) de ladite soupape de protection (14) communique avec l'orifice d'entrée (24b) d'une soupape d'isolement (16) semblable à la soupape de protection (14), des deuxièmes moyens (20) sensibles à la pression règnant dans la capacité étant prévus pour relâcher la contre pression appliquée sur le clapet (34b) de la soupape d'isolement (16) lorsque ladite pression dépasse un deuxième seuil prédéterminé inférieur au premier.

2. Dispositif selon la revendication 1, caractérisé en ce que le deuxième seuil est légèrement supérieur à la pression nominale dans ladite capacité (10) et en ce que les deuxièmes moyens (20) commandent l'application de ladite contre pression sur le clapet (34b) de la soupape d'isolement (16) lorsque la pression dans la capacité descend en dessous d'un seuil de fermeture inférieur à ladite pression nominale.

3. Dispositif selon l'une quelconque des revendications 1 et 2, caractérisé en ce que les deuxièmes moyens (20) comprennent de préférence des moyens de commande auxiliaires (64b) aptes à relâcher la contre pression appliquée sur le clapet (34b) de la soupape d'isolement (16) lorsque la pression règnant dans la capacité est inférieure au deuxième seuil.

## Claims

1. A system for protecting a receptacle (10) holding a pressure fluid, the system comprising a safety valve (14) formed with at least one inlet orifice (24a) communicating with the receptacle (10) and with at least one outlet orifice (26a) and having a valve seat (32a) disposed between the inlet orifice (24a) and the outlet orifice (26a), the valve (14) comprising a lid (34a) so responding to a back pressure as to normally be in sealing-tight engagement with the seat (32), the system also having means (18) responding to the pressure in the receptacle to reduce the back pressure when the same exceeds a first predetermined threshold, characterised in that the safety valve outlet orifice (26a) communicates with the inlet orifice (24b) of an isolating valve (16) similar to the safety valve (14), second means (20) which respond to the pressure in the receptacle being provided to reduce the back pressure operative on the lid (34b) of the isolating valve (16) when the latter pressure exceeds a second predetermined threshold lower than the first threshold.

2. A system according to claim 1, characterised in that the second threshold is slightly greater than the rated pressure in the receptacle (10) and the second means (20) cause the back pressure to be applied to the lid (34b) of the isolating valve (16) when the pressure in the receptacle drops below a closure threshold lower than the rated pressure.

3. A system according to claim 1 and/or 2, characterised in that the second means (20) preferably comprise auxiliary control means (64b) adapted to reduce the back pressure operative on the isolating valve lid (34b) when the pressure in the receptacle is below the second threshold.

## Patentansprüche

1. Schutzanlage für eine Kapazität (10), die ein unter Druck stehendes FLuid enthält, bestehend aus einem Schutzventil (14) mit wenigstens einer Eintrittsöffnung (24a), die mit der Kapazität (10) in Verbindung steht, wenigstens einer Auslaßöffnung (26a), einem Ventilsitz (32a), der zwischen der Eintrittsöffnung (24a) und der Auslaßöffnung (26a) angeordnet ist, und einem Ventilkörper (34a), der auf einen Gegendruck empfindlich ist, um normalerweise dicht auf dem Ventilsitz (32a) aufzusitzen, wobei die Anlage darüberhinaus Einrichtungen (18) enthält, die auf den Druck ansprechen, der in der Kapazität herrscht, um den genannten Gegendruck zu entspannen, wenn der genannte Druck einen ersten vorbestimmten Schwellenwert überschreitet, dadurch gekennzeichnet, daß die Auslaßöffnung (26a) des genannten Schutzventils (14) mit der Eintrittsöffnung (24b) eines Isolierventils (16) verbunden ist, das dem Schutzventil (14) gleicht, daß zweite Einrichtungen (20) vorgesehen sind, die auf den in der Kapazität herrschenden Druck ansprechen, um den Gegendruck, der an dem Ventilkörper (34b) des Isolierventils (16) wirkt, zu entspannen, wenn der genannte Druck einen zweiten vorbestimmten Schwellenwert überschreitet, der unter dem ersten liegt.

2. Anlage nach Anspruch 1, dadurch gekennzeichnet, daß der zweite Schwellenwert leicht über dem Nominaldruck in der genannten Kapazität (10) liegt und daß die zweiten Einrichtungen (20) die Zuführung des genannten Gegendrucks zum Ventilkörper (34b) des Isolierventils (16) befehlen, wenn der Druck in der Kapazität unter einen Schließschwellenwert fällt, der unterhalb des genannten Nominaldrucks liegt.

3. Anlage nach einem der Ansprüche 1 und 2, dadurch gekennzeichnet, daß die zweiten Einrichtungen (20) vorzugsweise Hilfssteuereinrichtungen (64b) aufweisen, die dazu geeignet sind, den dem Ventilkörper (34b) des Isolierventils (16) zugeführten Gegendruck zu entspannen, wenn der in der Kapazität herrschende Druck unterhalb des zweiten Schwellenwerts liegt.

44a  18  46a
42a
40a
48a
52a
56a
54a
60a
50a
58a  14
62a  10  24a  34a  38a
66a  28  32a  36a
26a  22
64a  24b  26b
32b
34b
16  36b

20  44b
46b  40b  42b
56b  48b
52b
24b
50b
58b
62b
66b
64b
50b

0 082 038